## Europäisches Patentamt
## European Patent Office
## Office européen des brevets

(19)

(11) Veröffentlichungsnummer: **0 164 542**
**B1**

(12) **EUROPÄISCHE PATENTSCHRIFT**

(45) Veröffentlichungstag der Patentschrift:
02.08.89

(51) Int. Cl.⁴: **G 01 B 5/28,** G 01 B 1/00,
G 01 B 5/00

(21) Anmeldenummer: **85105116.9**

(22) Anmeldetag: **26.04.85**

(54) Haarlineal.

(30) Priorität: **15.05.84 CH 2382/84**

(43) Veröffentlichungstag der Anmeldung:
**18.12.85 Patentblatt 85/51**

(45) Bekanntmachung des Hinweises auf die Patenterteilung:
**02.08.89 Patentblatt 89/31**

(84) Benannte Vertragsstaaten:
**AT DE FR GB IT SE**

(56) Entgegenhaltungen:
**CH-A-501 891**

(73) Patentinhaber: **Wahli, Marcel, Allmendstrasse 3,
CH- 8154 Oberglatt (CH)**

(72) Erfinder: **Wahli, Marcel, Allmendstrasse 3, CH- 8154
Oberglatt (CH)**

(74) Vertreter: **Hunziker, Jean, Patentanwaltsbureau
Jean Hunziker Schulhausstrasse 12, CH- 8002
Zürich (CH)**

EP 0 164 542 B1

## Beschreibung

Die Erfindung betrifft ein Haarlineal.

Haarlineale aus gehärtetem Stahl und einer messerartigen Kante oder aus Glas mit einer halbzylindrisch gerundeten Kante von ca. 0.2 mm Radius sindbekannt. Sie werden (z. B. aus der CH-A-501 891) als Hilfsmittel für Vergleichsmessungen in mechanischen Werkstätten und in der Werkzeugmacherei verwendet. Zum Prüfen der Geradlinigkeit einer Kante bzw. der Ebenheit einer Fläche wird das Haarlineal auf ein Werkstück gelegt und/oder verschoben, wobei der zwischen Kante und Werkstück ersichtliche, durchscheinende Spalt das Mass der Geradlinigkeit bzw. der Ebenheit ergibt.

Bereits bei geringen Temperaturschwankungen, insbesondere ausgelöst durch die Handwärme beim Arbeiten, deformiert sich die Messkante und es ergeben sich Messungenauigkeiten. Um dies zu eliminieren oder mindestens zu verzögern, werden solche Geräte aus einem Profilstab, z. B. fünfkantiger, prismatischer Stab, aus gehärtetem Stahl gefertigt. Infolge der verlangten Formstabilität muss das Haarlineal einen verhältnismässig grossen Querschnitt aufweisen, wodurch es schwer und unhandlich wird, was anlässlich der Kontrolle von grösseren Werkstücken eine rasche Ermüdung zur Folge hat. Ausserdem kann sich das zu messende Werkstück durch das Gewicht des aufgelegten Haarlineals deformieren.

Bereits der thermische Prozess für die Härtung des Stahls führt zu Spannungen im Haarlineal, welche bei späterer Berührung und sich dadurch ergebender stellenweiser Erwärmung zu zusätzlichen Verformungen der Messkante führen können. Weitere unterschiedliche Spannungen ergeben sich bei der Verwendung des Haarlineals, indem dieses auf der einen Seite lediglich vom Daumen, auf der anderen jedoch von vier Fingern an verschiedenen Stellen gehalten wird, was eine unterschiedliche Wärmeeinwirkung zur Folge hat. Da gehärteter Stahl ein schlechter Wärmeleiter ist, kann zudem ein örtlicher Wärmestau entstehen.

Sämtliche vorgenannten, unregelmässig verteilten Spannungszonen wirken sich negativ auf die beim Vergleichsmessen einzig aktive, relativ dünne Messkante aus und es besteht die Möglichkeit einer Verwerfung. Der Messprozess muss unterbrochen werden.

Um diese Wärmeeinflüsse zu vermeiden, wurde vorgeschlagen, die Griffpartie, d. h. den der Messkante abgewandten Bereich des Haarlineals, mit Kunststoff- oder Holzleisten als Griffläche zu versehen, was den Wärmefluss verzögert, nicht aber verhindert. Bei Holzgriffen besteht die Gefahr der Aufnahme von Feuchtigkeit, was wiederum zu einseitiger Spannung führt.

Aufgabe der Erfindung ist ein gewichtsleichtes, stabiles, bei normalem Gebrauch keinen Wärmespannungen unterliegendes Haarlineal.

Dies wird erfindungsgemäss mit einem Haarlineal gemäss den Merkmalen des Patentanspruches 1 erreicht.

Durch die sowohl wärme- als auch ausdehnungsmässige Trennung des Griffteils und des Messteils bleibt die Messkante von den im Griffteil auftretenden Spannungen praktisch unbeeinflusst. Zudem besteht die Möglichkeit, den Griffteil aus leichterem und event. kostengünstigerem Material als den Messteil herzustellen. Die Messkante des Messteils ist ersetzbar und kann vorzugsweise aus teurerem Material hergestellt sein.

In der Zeichnung sind verschiedene Ausführungsvarianten von Haarlinealen dargestellt. Es zeigen

Fig. 1     eine axonometrische Ansicht eines Haarlineals,

Fig. 2     eine Ausführungsvariante des Griffteils, und

Fig. 3     eine Ausführungsvariante des die Messkante aufnehmenden Messkörpers.

Das Haarlineal besteht aus dem Griffteil 1 und dem Halteteil 2 für die Schiene 3 mit der Messkante 30.

Der Griffteil 1 ist von prismatischer Form und besteht vorzugsweise aus Aluminium. Er ist über Schrauben 4 mit dem Halteteil 2 verbunden, wobei die Schraubenschäfte 40 mit radialem Spiel in den Bohrungen 14 des Griffteils liegen. Dagegen sind die Schrauben 4, zwecks Bildung eines Zwischenraumes 21, mit ihrem Gewindeteil 42 fest in die Gewindelöcher 24 des Halteteils 2 eingeschraubt. Zwischen dem Griffteil 1 und dem Halteteil 2 ist je ein, eine Schraube 4 umfassender O-Ring 12 angeordnet, was zusammen eine starre bis leicht elastische Verbindung von Griff- und Halteteil ergibt.

Der Halteteil 2 kann aus jedem form- und temperaturbeständigen Material, z. B. Stahl, Keramik oder dgl. und die das eigentliche Kernstück des Haarlineals bildende Schiene 3 mit der Messkante 30 aus einem teureren Material, z. B. Hartmetall, Spezialglas oder dgl. bestehen, wobei diese Schiene, über ein starres oder geringfügig elastisches Haftmaterial 32, z. B. Klebstoff, Kitt oder dgl. in der Längsnut 23 des Halteteils eingebettet ist.

Die keilförmig gegen die Messkante zulaufenden, dem Festhalten des Haarlineals bei dessen Benützung dienenden Seitenflächen 15 des Griffteils 1 können geriffelt oder mit einer Schutzschicht überzogen sein, wobei auf den Griffteil übertragene Wärme wohl eine Ausdehnung des Griffteils 1 verursachen kann, jedoch eine Wärmeübertragung weder auf den Halteteil 2, noch auf die Schiene 3 mit der Messkante 30 stattfindet. Als Schutz gegen Wärmefluss, d. h. als Temperaturschwelle, dienen der Zwischenraum 21, die O-Ringe 12 und das Verbindungsmaterial 32. Als einzige Wärmebrücke könnten die Schrauben 4 betrachtet werden, welche jedoch mit Spiel in den Bohrungen 14 liegen. Eine feste Verbindung stellen lediglich die Unterseiten der Schraubenköpfe dar. Die Anordnung der Schrauben 4 mit Spiel im Griffteil 1 ermöglichen diesem ein gewisses Wärmespiel gegenüber der starren Distanz der Gewindeteile 42 im Halteteil 2.

Bei Beschädigung der Messkante 30 kann entweder die Schiene 3 in der Längsnut 23 des Halteteils 2 ersetzt oder der Halteteil mit wenigen Handgriffen ersetzt bzw. für eine Nachbearbeitung abmontiert werden. Am Griffteil kann auch ein anderes Messteil mit einer längeren Messkante angebaut werden.

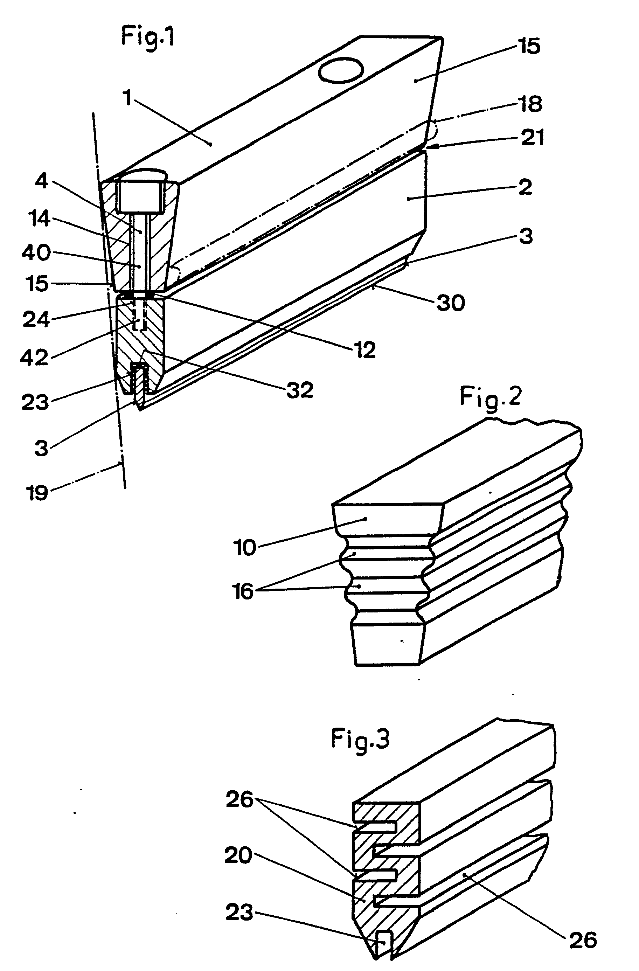

In Fig. 1 ist mit 19 eine Fläche, auf die das Haarlineal bei Nichtgebrauch ohne Gefahr einer Beschädigung oder Wärmebeeinflussung gelegt werden kann, angedeutet. Die Profilformen von Griffteil 1 und Halteteil 2 sind so gewählt, dass die Messkante 30 mit dieser Fläche 19 nicht in Berührung kommt.

Am Griffteil 1 kann nahe Und längs des als Temperaturschwelle dienenden Zwischenraumes 21 ein Kragen 18 angeordnet sein, welcher beim Festhalten des Haarlineals ein Berühren des Halteteils mit den Fingern und damit eine direkte Wärmeübertragung verhindert.

Was die Wahl des Grundmaterials der einzelnen Teile anbelangt, bestehen sowohl Halteteil 2, als auch Schiene 3 vorteilhafterweise aus Material mit ähnlichen Wärmeausdehnungskoeffizienten, insbesondere als ausser der Hand- auch die Umgebungs- und die Atemwärme einen Einfluss auf die Messgenauigkeit haben können. Ein Griffteil aus Aluminium oder Kunststoff gewährleistet ein bedeutend geringeres Gewicht des Haarlineals und der beschriebene Aufbau die gleiche bzw. bessere Stabilität als das- bzw. diejenige herkömmlicher Haarlineale.

Fig. 2 zeigt eine Ausführungsvariante eines Griffteils 10 mit mit Rippen 16 versehenen Seitenflächen, was eine gute Griffigkeit ergibt und ausserdem die Finger nicht voll auf diesen Flächen aufliegen.

Fig. 3 zeigt eine Ausführungsvariante eines Halteteils 20, ohne eingesetzte Meßschiene. Durch die wechselseitige Anordnung von Längsschlitzen 26 wird der Wärmedurchgang vom Griffteil zur Messkante zusätzlich erschwert. Der mäanderartige Wärmefluss ist an der in der Zeichnung dargestellten Stirnseite leicht erkennbar. Die Längsschlitze 26 gewährleisten eine Vergrösserung der Wärmeabstrahlfläche und es findet kein Stabilitätsverlust des Haarlineals statt.

## Patentansprüche

1. Haarlineal, das oben als Griff und unten als Halter für eine in eine Längsnut eingesetzte Schiene mit Messkante ausgebildet ist, dadurch gekennzeichnet, dass das Haarlineal aus zwei Teilen, nämlich einem Griffteil (1) und einem daran befestigten Messblock (2) mit der Meßschiene (3), besteht, dass zwischen dem Griffteil (1) und dem Messblock (2) ein Dämmspalt (21), vorzugsweise in Form eines Luftzwischenraumes mit wenigen gedämmten Wärmebrücken, angeordnet ist, dass die Wärmebrücken aus zwei Schrauben (4) bestehen, deren Schäfte den Griffteil (1) in einer Bohrung (14) ohne Berührung der Wandung frei durchdringen und dass die Schrauben lediglich mit einem unteren Teil ihres Zylinderkopfes, nahe der Oberkante des Griffteils, auf diesem aufliegen und mit ihrem unteren Gewindeteil in ein Gewindeloch (24) des oberen Teiles des Messblockes (2) eingreifen, wobei um den den Zwischenraum (21) überbrückenden Schaftabschnitt zentrisch ein elastischer O-Ring (12) als Distanzmittel zwischen Griffteil und Messblock angeordnet ist, so daß die Verbindung von Griffteil und Messblock eine minimale gegenseitige Bewegung zulässt.

2. Haarlineal nach Anspruch 1, dadurch gekennzeichnet, dass als zusätzliche Dämmung zwischen dem Messblock (2) und der in der Längsnut (23) angeordneten Schiene (3) mit Messkante (32) Kitt angeordnet ist.

3. Haarlineal nach Anspruch 1 oder 2, dadurch gekennzeichnet, dass am Griffteil (1) ein entlang dem Zwischenraum (21) Verlaufender, über die Seitenflächen (15) des Griffteils (1) vorstehender Kragen (18) derart angeordnet ist, dass eine durch die Seitenkanten des Griffteils (1) und des Messblockes (2) bzw. den Kragen (1) des Griffteils (1) und der Seitenkante des Messblockes (2) gelegte Gerade (19) nicht durch die Schiene (3) bzw. die Messkante (30) verläuft.

4. Haarlineal nach einem der Ansprüche 1 bis 3, dadurch gekennzeichnet, dass der Messblock (2) in der Erstreckung Zwischenraum (21) - Längsnut (23) quer verlaufende, wechselseitig angeordnete Längsschlitze (26) aufweist.

5. Haarlineal nach einem der Ansprüche 1 bis 4, dadurch gekennzeichnet, dass der Griffteil (1) aus einem leichten, keine Wärmespannungen abgebenden Material, z. B. Aluminium oder Kunststoff, und der Messblock (2) aus einem massiven, Eigensteifigkeit aufweisenden Material, z. B. gehärteter Stahl oder Kunststoff, und die Schiene (3) mit der Messkante (30) in bekannter Weise aus einem harter Material, z. B. Hartmetall oder Glas besteht.

6. Haarlineal nach Anspruch 5, dadurch gekennzeichnet, dass das Material des Messblockes (2) und der Meßschiene (3), zwecks Verhinderung von Wärmespannungen, einen ähnlichen Wärmeausdehnungskoeffizienten aufweist.

## Claims

1. Straight edge, which has its upper end in the form of a gripping means and its lower end in the form of a means for retaining a bar, which is inserted into an elongate groove and is provided with a measuring edge, characterised in that the straight edge comprises two component parts, namely a gripping portion (1) and a measuring block (2), which is secured thereto and is provided with the measuring bar (3), in that an insulation gap (21), preferably in the form of an intermediate air space with a small number of insulated thermal bridges, is disposed between the gripping portion (1) and the measuring block (2), in that the thermal bridges comprise two screws (4), the shanks of which freely penetrate the gripping portion (1) in a bore (14) without touching the wall, and in that the screws merely lie on the gripping portion, with a lower portion of their cylindrical head, close to the upper edge of the gripping portion, and engage with their lower threaded portion in a threaded bore (24) provided in the upper portion of the measuring block (2), a resilient O-ring (12) being disposed centrally around the shank section which spans the intermediate space (21), as a spacer means between the gripping portion and measuring block, so that the connection between gripping portion and measuring block permits minimal, reciprocal movement.

2. Straight edge according to claim 1, characterised in that putty is disposed as additional insulation between the measuring block (2) and the bar (3), which is disposed in the elongate groove (23) and is provided with measuring edge (32).

3. Straight edge according to claim 1 or 2, characterised in that a collar (18), which extends along the intermediate space (21) and protrudes beyond the lateral faces (15) of the gripping portion (1), is disposed on the gripping portion (1) in such a manner that a straight line (19), extending through the lateral edges of the gripping portion (1) and measuring block (2) or respectively through the collar (18) of the gripping portion (1) and lateral edge of the measuring block (2), does not extend through the bar (3) or measuring edge (30).

4. Straight edge according to one of claims 1 to 3, characterised in that the measuring block (2) has, in the extension from intermediate space (21) to elongate groove (23), transversely extending, alternately disposed elongate slots (26).

5. Straight edge according to one of claims 1 to 4, characterised in that the gripping portion (1) is formed from a lightweight material which does not generate any thermal stresses, e. g. aluminium or plastics material, and the measuring block (2) is formed from a solid material, having inherent rigidity, e. g. hardened steel or plastics material, and the bar (3), provided with the measuring edge (30), is formed in known manner from a hard material, e. g. hard metal or glass.

6. Straight edge according to claim 5, characterised in that the material of the measuring block (2) and measuring bar (3) has a similar coefficient of thermal expansion for the purpose of preventing thermal stresses.

## Revendications

1. Règle de précision constituée au dessus sous la forme d'une poignée et au dessous sous la forme d'une monture pour une réglette avec une arête de mesure, insérée dans une rainure longitudinale, caractérisée en ce qu'elle est constituée de deux parties, à savoir une poignée (1) et, fixé à celle-ci, un bloc de mesure (2) avec la réglette de mesure (3); en ce qu'entre la poignée (1) et le bloc de mesure (2) est ménagé un intervalle (21) formant une barrière thermique, de préférence sous la forme d'une couche d'air intermédiaire avec peu de ponts thermiques, qui sont isolés; en ce que ces ponts thermiques consistent en deux vis (4) dont les tiges traversent librement la poignée (1) en passant dans un alésage (14) sans contact avec la paroi; et en ce que ces vis ne portent sur la poignée (1) que par une partie inférieure de leur tête cylindrique, près du bord supérieur de la poignée, et sont en prise par leur partie inférieure filetée dans un trou fileté (24) de la partie supérieure du bloc de mesure (2), tandis qu'autour de la partie de la tige de la vis traversant l'intervalle (21) est disposé un joint torique élastique (12) formant un moyen d'espacement entre la poignée et le bloc de mesure, de telle sorte que la liaison entre la poignée et le bloc de mesure admette un mouvement réciproque minimal.

2. Règle de précision selon la revendication 1, caractérisée en ce que du mastic (32) est disposé comme isolation supplémentaire entre le bloc de mesure (2) et la réglette (3) disposée, avec son arête de mesure (30), dans la rainure longitudinale (23).

3. Règle de précision selon la revendication 1 ou 2, caractérisée en ce que sur la poignée (1) est disposé un collet saillant (18) s'étendant le long de l'intervalle (21) sur les surfaces latérales (15) de la poignée (1), de telle sorte qu'une ligne droite (19) passant par les arêtes latérales de la poignée (1) et du bloc de mesure (2), ou par le collet (18) de la poignée (1) et l'arête latérale du bloc de mesure (2), ne rencontre pas la réglette (3) ni son arête de mesure (30).

4. Règle de précision selon une des revendications 1 à 3, caractérisée en ce que le bloc de mesure (2) présente, dans sa partie s'étendant entre l'intervalle (21) et la rainure longitudinale (23), des fentes longitudinales (26) s'étendant transversalement, disposées alternativement de part et d'autre.

5. Règle de précision selon une des revendications 1 à 4, caractérisée en ce que la poignée (1) est faite d'un matériau léger ne donnant pas lieu à des tensions thermiques, par exemple aluminium ou matière plastique; en ce que le bloc de mesure (2) est fait d'un matériau massif présentant une rigidité intrinsèque, par exemple acier trempé; et en ce que la réglette (3) avec l'arête de mesure (30) est faite, de manière connue, d'un matériau dur, par exemple alliage dur ou verre.

6. Règle de précision selon la revendication 5, caractérisée en ce que le matériau du bloc de mesure (2) et celui de la réglette de mesure (3) présentent un coefficient de dilatation thermique semblable, afin d'empêcher les tensions thermiques.

Fig.1

1

4

14

40

15

24

42

23

3

19

15

18

21

2

3

30

12

32

Fig.2

10

16

Fig.3

26

20

23

26